# EUROPÄISCHE PATENTANMELDUNG

(11) **EP 3 284 867 A1**
(43) Veröffentlichungstag der Anmeldung: **21.02.2018**
(21) Anmeldenummer: 16184837.9
(22) Anmeldetag: 19.08.2016
(51) Int. Cl.: E02B 3/12, E01C 19/48, B62D 33/063

(54) **BÖSCHUNGSFERTIGER**

(71) Anmelder: Walo Bertschinger AG, 8953 Dietikon (CH)
(72) Erfinder: ZINGG, Bernhard, 8197 Rafz (CH)
(74) Vertreter: Detken, Andreas

(57) **Zusammenfassung**

Ein Fertiger zum Einbau einer Decke aus einem Material an einer Böschung (110) weist ein Trägerfahrzeug (200) mit einem ersten Fahrwerk (220) und einen am Trägerfahrzeug befestigten Ausleger (300) mit einem zweiten Fahrwerk (320) auf. Das Trägerfahrzeug und der Ausleger sind gemeinsam entlang einer Arbeitsrichtung (L) verfahrbar. Am Ausleger sind eine Verteileinrichtung (600), um das Material entlang einer Querrichtung (N) quer zur Arbeitsrichtung zu verteilen und auszutragen, und eine Abzieheinrichtung (700) zum Abziehen des ausgetragenen Materials angebracht. Die Verteileinrichtung und die Abzieheinrichtung erstrecken sich entlang der Querrichtung in einen hinter dem zweiten Fahrwerk (320) gelegenen Bereich hinein. Die Verteileinrichtung kann eine Schnecke sowie eine rohrförmige Hülle (610) umfassen, welche die Schnecke mit Ausnahme einer nach unten hin offenen Austragöffnung umlaufend bedeckt, so dass die Schnecke und die rohrförmige Hülle gemeinsam eine nach unten hin offene Trogschnecke bilden. Die Abzieheinrichtung kann eine schwimmende Bohle umfassen.

## Beschreibung

### TECHNISCHES GEBIET

Die vorliegende Erfindung betrifft einen Fertiger zum Einbau einer Decke aus einem fliessfähigen Material, insbesondere aus Asphalt oder Beton, entlang einer Böschung. Insbesondere kann es sich um eine Böschung eines Kanals handeln. Ein solcher Fertiger wird im Folgenden auch als Böschungsfertiger oder Kanalfertiger bezeichnet.

### STAND DER TECHNIK

Beim Bau und bei der Sanierung von Dämmen, Deponien oder Kanälen und ähnlichen Bauwerken stellt sich häufig die Aufgabe, eine Böschung mit einer Schicht aus einem Material wie Beton oder Asphalt, im Folgenden auch als Decke bezeichnet, zu versehen. Eine solche Schicht kann z.B. eine bituminöse Dichtungsschicht sein. Die Böschung kann eine erhebliche Neigung aufweisen, die ohne weiteres 30° oder sogar 40° übersteigen kann.

Eine bekannte Bauform eines Fertigers zum Einbau von Decken in Böschungen weist ein unteres Fahrwerk auf, das auf einer unteren Fahrbahn in der Sohle entlang des Fusses der Böschung in einer Hauptarbeitsrichtung horizontal verfahrbar ist, sowie ein oberes Fahrwerk, das entlang der oberen Böschungskante auf einer oberen Fahrbahn auf der Krone oder einer Berme ebenfalls horizontal entlang der Hauptarbeitsrichtung verfahrbar ist. Die Fahrwerke tragen einen Grundrahmen, der sich quer zur Hauptarbeitsrichtung entlang der Neigung der Böschung erstreckt. Der Grundrahmen trägt eine Fördervorrichtung, um das Material entlang der Hangneigung zu fördern. Das Material wird am benötigten Ort ausgetragen, verdichtet und geglättet. Dabei unterscheidet man einen Einbau in Längsrichtung (Verdichtung und Glättung entlang der Hauptarbeitsrichtung) oder in Querrichtung (Verdichtung und Glättung entlang der Hangneigung).

So offenbart die DE 103 58 363 A1 einen Gleitschalungsfertiger für einen Einbau einer Schicht auf einer Böschungsoberfläche in Querrichtung. Ein Gleitschalungstisch ist entlang des Grundrahmens in Richtung der Hangneigung verfahrbar. Um eine Lamelle der Böschungsoberfläche zu fertigen, wird das einzubauende Material zum Gleitschalungstisch gefördert, aus diesem ausgetragen und durch die Gleitschalung verdichtet, während der Gleitschalungstisch vom unteren Ende der Böschung zum oberen Ende der Böschung verfahren wird. Nachdem auf diese Weise eine Lamelle gefertigt wurde, wird der Gleitschalungstisch wieder nach unten in seine Ausgangsposition verfahren, und der Fertiger wird um die Breite der soeben gefertigten Lamelle entlang der Hauptarbeitsrichtung verfahren, bevor auf die gleiche Weise wie zuvor eine weitere Lamelle gefertigt wird.

Dieser Gleitschalungsfertiger arbeitet diskontinuierlich, indem die Böschungsoberfläche lamellenweise gefertigt wird. Entsprechend ist die Produktivität eines solchen Fertigers vergleichsweise gering, und es entstehen unerwünschte Querfugen zwischen aufeinanderfolgenden Lamellen, die aufwändig geglättet, gedichtet oder anderweitig nachbearbeitet werden müssen. Zudem kann ein solcher Fertiger nur zum Einsatz kommen, wenn auf der Krone oder auf einer Berme eine Fahrbahn angelegt ist, auf der das obere Fahrwerk verfahrbar ist. Des weiteren weist der Fertiger im Bereich der Krone eine relativ grosse Bauhöhe auf. Dadurch ist es im Kanalbau häufig nicht möglich, den Fertiger unter existierenden Brücken hindurchzubewegen, und der Fertiger muss vor einer Brücke aufwändig demontiert, umgesetzt und hinter der Brücke wieder neu montiert werden, um hinter einer Brücke weiterarbeiten zu können. Dies ist vor allem bei Sanierungsarbeiten hinderlich, da sanierungsbedürftige Kanäle häufig schon von bestehenden Brücken überspannt werden.

Aus der DE 29 37 205 A1 ist ein Fertiger für die Fertigung einer Betondecke in einer Böschung bekannt, bei dem der Einbau in Längsrichtung erfolgt und der dadurch einen kontinuierlichen Einbau entlang der Hauptarbeitsrichtung ermöglicht. Der Beton wird mittels einer am Grundrahmen fest montierten Gleitschalung nivelliert und abgezogen. Auch dieser Fertiger benötigt Fahrbahnen sowohl in der Sohle als auch auf der Krone oder auf einer Berme, und der Fertiger weist an der Krone bzw. Berme eine grosse Bauhöhe auf. Zudem werden durch die starr montierte Gleitschalung Bodenunebenheiten schlecht ausgeglichen.

Aus der DE 21 58 818 A1 ist ein weiterer Böschungsfertiger bekannt. Bei diesem ist das obere Fahrwerk so ausgebildet, dass es senkrecht zur Oberfläche der Böschung ausgerichtet werden kann und somit direkt auf der geneigten Oberfläche der Böschung laufen kann. Dadurch wird keine Fahrbahn auf der Krone oder auf einer Berme benötigt. Dieser Fertiger arbeitet allerdings in Querrichtung, also diskontinuierlich, und bauartbedingt ist es nicht möglich, die Decke im Bereich des oberen Fahrwerks einzubauen, d.h. die maximale Arbeitsbreite ist durch den Bereich zwischen dem oberen und dem unteren Fahrwerk begrenzt. Die Decke kann somit nicht in einem Arbeitsgang über die gesamte Böschungshöhe gefertigt werden.

Weitere Ausführungsformen eines Fertigers zum Einbau einer Decke in eine Böschung eines Kanals sind aus der EP 0 071 075 A2 bekannt. Auch diese Fertiger erfordern Fahrwerke auf der Krone oder Berme und ermöglichen einen Einbau der Decke nur im Bereich zwischen den Fahrwerken. In bestimmten Ausführungsformen erfolgt dabei die Verteilung des einzubauenden Materials über eine Schnecke, die in einem nach oben offenen Gehäuse untergebracht ist. Das Material wird nach unten aus dem Gehäuse ausgetragen und durch einen als Gleitschalung wirkenden Fortsatz des Gehäuses geglättet. Dabei wird ein Abrutschen des Materials wegen des abwärts zur Sohle hin gerichteten Materialdrucks anteilsmässig sowohl durch das Gehäuse als auch durch die Förderwirkung der Schnecke gestoppt. Bei einer solchen Gestaltung besteht allerdings die Gefahr einer Entmischung des einzubauenden Materials durch die kontinuierliche, nach oben gerichtete Förderwirkung der Schnecke. Zudem werden durch die starre Montage des Gehäuses am Grundrahmen Bodenunebenheiten schlecht ausgeglichen.

In US 3,466,990 ist ein Böschungsfertiger offenbart, der komplizierte Mechanismen zum Ausgleich von Bodenunebenheiten aufweist.

### DARSTELLUNG DER ERFINDUNG

In einem ersten Aspekt ist es eine Aufgabe der vorliegenden Erfindung, einen Böschungsfertiger bzw. Kanalfertiger anzugeben, der auch dann eingesetzt werden kann, wenn nur eine einzige Fahrbahn für den Fertiger zur Verfügung steht, insbesondere lediglich eine Fahrbahn in der Sohle, und der dennoch eine kontinuierliche Fertigung entlang der Hauptarbeitsrichtung über eine wählbare Höhe der Böschung erlaubt.

Diese Aufgabe wird durch einen Fertiger gelöst, wie er im Anspruch 1 angegeben ist. Weitere Ausführungsformen sind in den abhängigen Ansprüchen angegeben.

Es wird also ein Fertiger zum Einbau einer Decke aus einem Material an einer Böschung mit einem Böschungswinkel vorgeschlagen, wobei der Fertiger aufweist:
ein Trägerfahrzeug mit mindestens einem ersten Fahrwerk, um das Trägerfahrzeug entlang einer Arbeitsrichtung zu verfahren;
einen am Trägerfahrzeug befestigten Ausleger, der sich entlang einer Querrichtung quer zur Arbeitsrichtung seitlich vom Trägerfahrzeug weg erstreckt, wobei der Ausleger zur Anpassung an den Böschungswinkel gegenüber dem Trägerfahrzeug verschwenkbar ist und mindestens ein zweites Fahrwerk aufweist, um den Ausleger abzustützen und gemeinsam mit dem Trägerfahrzeug entlang der Arbeitsrichtung zu verfahren;
eine am Ausleger befestigte Verteileinrichtung, die dazu ausgebildet ist, das Material entlang der Querrichtung zu verteilen und auszutragen, und
eine der Verteileinrichtung bezüglich der Arbeitsrichtung nachfolgende Abzieheinrichtung zum Abziehen des ausgetragenen Materials entlang der Arbeitsrichtung,
wobei das zweite Fahrwerk dazu ausgebildet ist, sich auf einem geneigten Bereich der Böschung abzustützen, und
wobei sich die Verteileinrichtung und die Abzieheinrichtung entlang der Querrichtung in einen bezüglich der Arbeitsrichtung hinter dem zweiten Fahrwerk gelegenen Bereich hinein erstrecken.

Indem das zweite Fahrwerk dazu ausgebildet ist, sich auf einem geneigten Bereich der Böschung abzustützen und somit direkt in der Böschung verfahren zu werden, wird keine separate Fahrbahn für den Ausleger auf der Krone oder auf einer Berme benötigt. Es genügt eine einzige Fahrbahn für das Trägerfahrzeug auf der Sohle, auf der Krone oder auf einer Berme. Dabei wird das Material durch die Abzieheinrichtung entlang der Arbeitsrichtung abgezogen, das heisst, der Einbau der Decke erfolgt in Längsrichtung. Dadurch wird ein kontinuierlicher Einbau der Decke entlang der Arbeitsrichtung ermöglicht, ohne störende Querfugen, wie sie bei einer diskontinuierlichen Fertigung in Querrichtung entstehen. Um die Decke dennoch bezüglich der Höhe der Böschung auch in demjenigen Bereich, in dem das zweite Fahrwerk läuft, fertigen zu können, wird vorgeschlagen, die Verteileinrichtung und die Abzieheinrichtung so anzuordnen, dass sie sich bis in einen hinter dem zweiten Fahrwerk gelegenen Bereich hinein erstrecken.

Um zu ermöglichen, dass sich das zweite Fahrwerk in einem geneigten Bereich der Böschung auf dieser abstützt, ist das zweite Fahrwerk vorzugsweise um eine zur Arbeitsrichtung im Wesentlichen parallele Richtung am Ausleger verschwenkbar. Dabei kann es insbesondere in eine Orientierung gebracht werden, in der es senkrecht zur Böschungsoberfläche auf dieser aufliegt, so dass die Radachsen der Räder des zweiten Laufwerks im Wesentlichen parallel zur Böschungsoberfläche bzw. parallel zu einer die Querrichtung und die Arbeitsrichtung enthaltenden Fläche verlaufen. Zwischen den Radachsen des zweiten Fahrwerks und des ersten Fahrwerks besteht dann ein Winkel, der in etwa dem Böschungswinkel entspricht. Das zweite Fahrwerk ist insbesondere aktiv angetrieben, um das zweite Fahrwerk unabhängig vom ersten Fahrwerk verfahren zu können.

Vorzugsweise weist dabei der Fertiger kein weiteres Fahrwerk auf, das im Normalbetrieb bezüglich der Arbeitsrichtung der Abzieheinrichtung nachfolgt, um die frisch gefertigte Decke nicht zu beschädigen.

Der Ausleger kann insbesondere um eine im Wesentlichen parallel zur Arbeitsrichtung verlaufende Achse gegenüber dem Trägerfahrzeug schwenkbar sein. Die genaue Orientierung dieser Schwenkachse kann von der Arbeitsrichtung um einige Grad abweichen, solange ein Verschwenken des Auslegers in eine quer zur Arbeitsrichtung ansteigende oder abfallende Böschung hinein möglich ist.

Vorteilhaft kann die Verteileinrichtung eine Förderschnecke sowie eine rohrförmige Hülle umfassen, wobei die Hülle mindestens einen Teil der Schnecke mit Ausnahme einer nach unten hin offenen Austragöffnung für das auszutragende Material umlaufend bedeckt, so dass die Schnecke und die rohrförmige Hülle gemeinsam eine nach unten hin offene Trogschnecke bilden. Die Schnecke erstreckt sich dabei mit ihrer Schneckenachse vorzugsweise in Querrichtung, d.h. in Richtung der Hangneigung. Indem die Hülle mindestens einen Teil der Schnecke im Wesentlichen umlaufend umgibt, wird verhindert, dass grössere Mengen des Materials, welches durch die Schnecke in Richtung Krone gefördert wurde, wieder über die Schnecke hinweg in Richtung Sohle abwärts abrutschen, bevor das Material ausgetragen wurde. Ein solches Abrutschen ist insbesondere deswegen unerwünscht, weil es sich beim auszutragenden Material in der Regel um ein Mischgut handelt und das Abrutschen über die Schnecke hinweg zu einer Entmischung des Mischguts führen kann. So haben gröbere Fraktionen die Tendenz, eher abzurutschen, als feinere Fraktionen.

Insbesondere umgibt die Hülle die Schnecke auch nach oben hin, d.h. in einem der Austragöffnung gegenüberliegenden Bereich, da hier die Gefahr des Abrutschens am grössten ist. Vorteilhaft umgibt die Hülle die Schnecke in einem geringen radialen Abstand. Insbesondere beträgt der radiale Abstand zwischen dem Aussenumfang der Schnecke und dem Innenumfang des Gehäuses zumindest in einem der Austrittsöffnung gegenüberliegenden, oberen Bereich bevorzugt weniger als 10 mm, besonders bevorzugt weniger als 5 mm. Die Hülle kann dazu vorteilhaft entlang eines Teils des Umfangs der Schnecke, vorzugsweise im Wesentlichen über den gesamten Umfang mit Ausnahme der Austragöffnung, eine kreiszylindrische innere Mantelfläche bilden. Bevorzugt bedeckt die Hülle einen Teil der Schnecke, der mindestens 70% ihrer Länge, besonders bevorzugt mindestens 80% ihrer Länge ausmacht.

Eine nach unten offene Trogschnecke der vorstehend genannten Art ist auch dann von Vorteil, wenn das zweite Fahrwerk nicht dazu ausgebildet ist, direkt in der Böschung zu laufen, oder wenn sich die Verteileinrichtung und die Abzieheinrichtung in Querrichtung nicht bis in einen hinter dem zweiten Fahrwerk gelegenen Bereich hinein erstrecken. Insofern bezieht sich die vorliegende Erfindung auch auf einen Fertiger mit den folgenden Eigenschaften:

Fertiger zum Einbau einer Decke aus einem Material an einer Böschung mit einem Böschungswinkel, wobei der Fertiger aufweist:
ein Trägerfahrzeug mit mindestens einem ersten Fahrwerk, um das Trägerfahrzeug entlang einer Arbeitsrichtung zu verfahren;
einen am Trägerfahrzeug befestigten Ausleger, der sich entlang einer Querrichtung quer zur Arbeitsrichtung seitlich vom Trägerfahrzeug weg erstreckt, wobei der Ausleger zur Anpassung an den Böschungswinkel gegenüber dem Trägerfahrzeug verschwenkbar ist und mindestens ein zweites Fahrwerk aufweist, um den Ausleger in der Böschung, auf einer Berme oder auf einer Krone der Böschung abzustützen und gemeinsam mit dem Trägerfahrzeug entlang der Arbeitsrichtung zu verfahren; und
eine am Ausleger befestigte Verteileinrichtung, die dazu ausgebildet ist, das auszutragende Material entlang der Querrichtung zu verteilen und auszutragen,
wobei die Verteileinrichtung eine Schnecke sowie eine rohrförmige Hülle umfasst, wobei die Hülle mindestens einen Teil der Schnecke mit Ausnahme einer nach unten hin offenen Austragöffnung für das auszutragende Material umlaufend bedeckt, so dass die Schnecke und die rohrförmige Hülle gemeinsam eine nach unten hin offene Trogschnecke bilden.

Bevorzugt sind die Schnecke und die Hülle gemeinsam bezüglich dem ersten und dem zweiten Fahrwerk höhenverstellbar, so dass eine variable Öffnungshöhe der Austragöffnung relativ zur Böschung einstellbar ist. Dadurch lässt sich die Menge des ausgetragenen Materials, also die erzeugte Schichtdicke vor der Abzieheinrichtung, steuern.

Um zu verhindern, dass das Material nach vorne hin, d.h. in Fertigungsrichtung, ausweicht, nachdem es durch die Austragöffnung ausgetragen wurde, ist es von Vorteil, wenn die Hülle am bezüglich der Arbeitsrichtung vorderen Ende der Austragöffnung eine elastische Überbrückungslippe aufweist, die dazu ausgebildet ist, die Öffnungshöhe zur Böschung hin zu überdecken. Indem die Überbrückungslippe elastisch ausgebildet wird, insbesondere aus einem elastischen Kunststoff oder einem Gummi, kann sie sich selbsttätig an unterschiedliche Öffnungshöhen anpassen.

Die Hülle kann am bezüglich der Arbeitsrichtung hinteren Ende der Austragöffnung eine Abstreiffläche bilden, um durch die Austragöffnung ausgetragenes Material an der Böschung anzulegen und so zu fixieren. Auf diese Weise wird die Tendenz vermindert, dass das Material nach dem Austragen aus der Austragöffnung in Richtung Sohle abrutscht.

Die Verteileinrichtung kann eine Einfüllschütte aufweisen, die an der Hülle angebracht ist, um das Innere der Hülle und damit die Schnecke mit dem auszutragenden Material zu beschicken. Vorteilhaft wird die Verteileinrichtung von derjenigen Seite her, an der sich auch das Trägerfahrzeug befindet, mit dem Material beschickt. Dazu ist es von Vorteil, wenn die Einfüllschütte in einem zum Trägerfahrzeug benachbarten Bereich des Auslegers angeordnet ist, insbesondere in einem Rahmen des Auslegers.

Die Abzieheinrichtung kann insbesondere eine Einbaubohle umfassen, wie sie an sich aus dem Stand der Technik wohlbekannt ist. Die Bohle kann grundsätzlich starr oder schwimmend am Ausleger montiert sein. Um Bodenunebenheiten auszugleichen, ist es von Vorteil, wenn die Abzieheinrichtung eine schwimmende Bohle umfasst. Unter einer schwimmenden Bohle wird eine Bohle verstanden, die nicht starr mit dem Ausleger verbunden ist, sondern die unter der Wirkung ihres Eigengewichts auf dem Untergrund aufliegt und in ihrer Höhenlage gegenüber dem Ausleger veränderlich ist, wenn sie über das ausgetragene Material gezogen wird und dabei z.B. über ein Hindernis hinweggleitet. Dazu kann die schwimmende Bohle relativ zum Ausleger um sich in Querrichtung erstreckende Schwenkachse passiv schwenkbar sein. Die Höhenlage der entsprechenden Schwenkachse kann verstellbar sein, um den Anstellwinkel der Bohle bezüglich der Arbeitsrichtung zu verändern. Dadurch kann die Verdichtungswirkung und somit letztlich die Einbaudicke der Decke im Zusammenspiel mit weiteren Grössen verändert werden.

Eine schwimmende Bohle an einem Ausleger eines Böschungsfertigers ist auch dann von Vorteil, wenn das zweite Fahrwerk nicht dazu ausgebildet ist, direkt in der Böschung zu laufen, oder wenn sich die Verteileinrichtung und die Abzieheinrichtung in Querrichtung nicht bis in einen hinter dem zweiten Fahrwerk gelegenen Bereich hinein erstrecken. Insofern bezieht sich die vorliegende Erfindung auch auf einen Fertiger mit den folgenden Eigenschaften:

Fertiger zum Einbau einer Decke aus einem Material an einer Böschung mit einem Böschungswinkel, wobei der Fertiger aufweist:
ein Trägerfahrzeug mit mindestens einem ersten Fahrwerk, um das Trägerfahrzeug entlang einer Arbeitsrichtung zu verfahren;
einen am Trägerfahrzeug befestigten Ausleger, der sich entlang einer Querrichtung quer zur Arbeitsrichtung seitlich vom Trägerfahrzeug weg erstreckt, wobei der Ausleger zur Anpassung an den Böschungswinkel gegenüber dem Trägerfahrzeug verschwenkbar ist und mindestens ein zweites Fahrwerk aufweist, um den Ausleger in der Böschung, auf einer Berme oder auf einer Krone der Böschung abzustützen und gemeinsam mit dem Trägerfahrzeug entlang der Arbeitsrichtung zu verfahren;
eine am Ausleger befestigte Verteileinrichtung, die dazu ausgebildet ist, das auszutragende Material entlang der Querrichtung zu verteilen und auszutragen; und
eine der Verteileinrichtung bezüglich der Arbeitsrichtung nachfolgende Abzieheinrichtung zum Abziehen des ausgetragenen Materials entlang der Arbeitsrichtung, wobei die Abzieheinrichtung eine schwimmende Bohle umfasst.

Schwimmende Bohlen finden im Strassenbau weite Verwendung. Um derartige bekannte schwimmende Bohlen in einem Böschungsfertiger der hier offenbarten Art ohne allzu grosse konstruktive Änderungen einsetzen zu können, ist es von Vorteil, wenn der Fertiger einen Bohlenträger aufweist, der zwischen dem Trägerfahrzeug und dem zweiten Fahrwerk am Ausleger angebracht ist. Der Bohlenträger weist bezüglich der Querrichtung eine erste und eine zweite Seite auf. Am Bohlenträger ist an der ersten Seite und an der zweiten Seite jeweils ein Zugarm schwenkbar angebracht. Die schwimmende Bohle ist dann mit den Zugarmen verbunden. Die schwimmende Bohle ist also mittels Zugarmen beidseitig am Bohlenträger angebracht, in ähnlicher Weise, wie sie im Strassenbau beidseitig an einem Zugfahrzeug angebracht würde. Auf diese Weise kann eine bestehende Konstruktion einer schwimmenden Bohle an einem Böschungsfertiger der hier offenbarten Art eingesetzt werden.

Dabei kann am Bohlenträger ein Verstellmechanismus ausgebildet sein, um den Anstellwinkel der schwimmenden Bohle zu verändern. Der Verstellmechanismus kann bezüglich der Querrichtung beidseitig am Bohlenträger ausgebildet sein. Er kann dazu ausgebildet sein, eine Höhenlage der Schwenkachsen der Zugarme relativ zum Ausleger zu verändern.

Um die Hangabtriebskraft der Bohle aufzunehmen und so unerwünschte Querbelastungen zu vermindern, kann zwischen dem Ausleger, insbesondere dem Bohlenträger, und der Bohle mindestens ein Abspannseil vorgesehen sein, das in einer Richtung verläuft, die eine Komponente in Querrichtung aufweist. Bevorzugt verläuft das Abspannseil in einem Winkel von nicht mehr als 30°, besonders bevorzugt von nicht mehr als 15° zur Querrichtung, um Querkräfte besonders gut aufnehmen zu können.

Der Fertiger kann einen Bedienstand mit Bedienelementen zur Bedienung des Fertigers aufweisen, z.B. in Form einer Kabine. Um dem Bedienpersonal einen besonders guten Überblick zu ermöglichen, ist es von Vorteil, wenn der Bedienstand derart mittels eines Schwenkmechanismus am Trägerfahrzeug angebracht ist, dass der Bedienstand relativ zum Trägerfahrzeug höhenverstellbar und um eine vertikale Achse verschwenkbar ist.

Ein solcher beweglicher Bedienstand ist auch dann von Vorteil, wenn das zweite Fahrwerk nicht dazu ausgebildet ist, direkt in der Böschung zu laufen, oder wenn sich die Verteileinrichtung und die Abzieheinrichtung in Querrichtung nicht bis in einen hinter dem zweiten Fahrwerk gelegenen Bereich hinein erstrecken. Insofern bezieht sich die vorliegende Erfindung auch auf einen Fertiger mit den folgenden Eigenschaften:

Fertiger zum Einbau einer Decke aus einem Material an einer Böschung mit einem Böschungswinkel, wobei der Fertiger aufweist:
ein Trägerfahrzeug mit mindestens einem ersten Fahrwerk, um das Trägerfahrzeug entlang einer Arbeitsrichtung zu verfahren;
einen am Trägerfahrzeug befestigten Ausleger, der sich entlang einer Querrichtung quer zur Arbeitsrichtung seitlich vom Trägerfahrzeug weg erstreckt, wobei der Ausleger zur Anpassung an den Böschungswinkel um eine im Wesentlichen parallel zur Arbeitsrichtung verlaufende Achse gegenüber dem Trägerfahrzeug verschwenkbar ist und mindestens ein zweites Fahrwerk aufweist, um den Ausleger in der Böschung, auf einer Berme oder auf einer Krone der Böschung abzustützen und gemeinsam mit dem Trägerfahrzeug entlang der Arbeitsrichtung zu verfahren;
eine am Ausleger befestigte Verteileinrichtung, die dazu ausgebildet ist, das auszutragende Material entlang der Querrichtung zu verteilen und auszutragen; und
einen Bedienstand mit Bedienelementen zur Bedienung des Fertigers, wobei der Bedienstand derart mittels eines Schwenkmechanismus am Trägerfahrzeug angebracht ist, dass er relativ zum Trägerfahrzeug höhenverstellbar und um eine vertikale Achse verschwenkbar ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen Böschungsfertiger gemäss einer Ausführungsform der vorliegenden Erfindung in einer ersten perspektivischen Ansicht;
- Fig. 2: den Böschungsfertiger 1 in einer Ansicht von hinten;
- Fig. 3: eine vergrösserte Darstellung der Figur 1;
- Fig. 4: eine weitere perspektivische Ansicht des Böschungsfertigers der Figur 1;
- Fig. 5: eine weitere perspektivische Ansicht des Böschungsfertigers der Figur 1;
- Fig. 6: eine Seitenansicht des Trägerfahrzeuges des Böschungsfertigers gemäss Figur 1;
- Fig. 7: eine perspektivische Ansicht des Auslegers des Böschungsfertigers gemäss Figur 1;
- Fig. 8: eine perspektivische Ansicht des Schwenkträgers des Böschungsfertigers gemäss Figur 1; und
- Fig. 9: eine perspektivische Ansicht des Bohlenträgers des Böschungsfertigers gemäss Figur 1.
- Fig. 10: eine perspektivische Ansicht der Verteileinrichtung des Böschungsfertigers gemäss Figur 1;
- Fig. 11: eine Ansicht der Verteileinrichtung der Figur 10 von vorne; und
- Fig. 12: eine Schnittdarstellung durch die Verteileinrichtung der Figur 10 in der Ebene B-B der Figur 11.

### BESCHREIBUNG BEVORZUGTER AUSFÜHRUNGSFORMEN

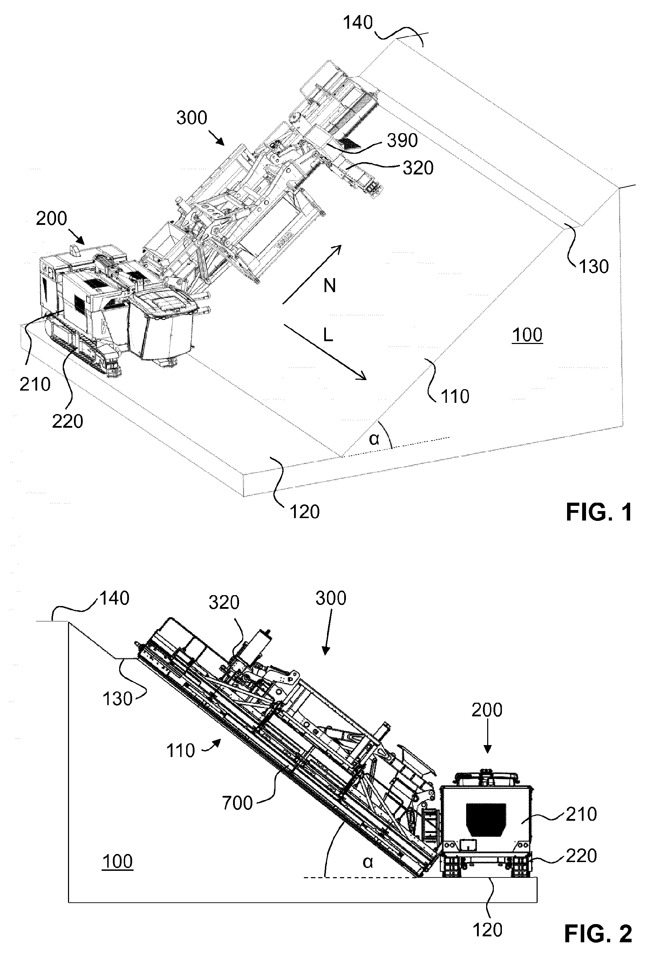

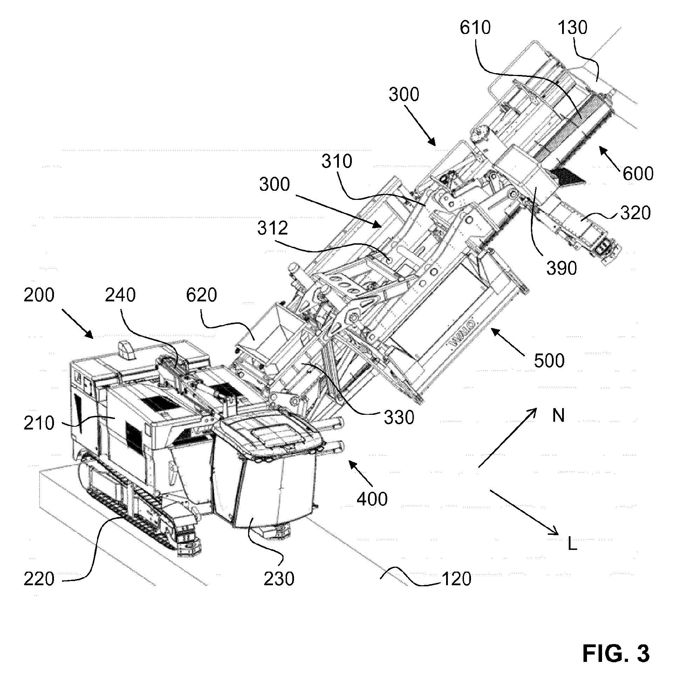

In den Figuren 1 bis 5 ist ein Böschungsfertiger gemäss einer Ausführungsform der vorliegenden Erfindung in einer Arbeitsstellung während der Bearbeitung einer Böschung 110 in einem Geländeabschnitt 100 illustriert.

Bei der Böschung 110 kann es sich insbesondere um die Böschung eines Kanals oder einer Deponie handeln. Die Böschung 110 weist einen Böschungswinkel α zur Horizontalen auf. An den unteren Rand der Böschung schliesst sich die horizontale Sohle 120 des Geländeabschnitts an. Im oberen Randbereich der Böschung ist im vorliegenden Beispiel eine Berme 130 ausgebildet. Oberhalb der Berme 130 setzt sich die Böschung bis zur Krone 140 fort. Richtungsangaben werden im vorliegenden Dokument wie folgt verwendet: Als Arbeitsrichtung oder Längsrichtung L wird eine horizontale Richtung in der Böschungsebene bezeichnet. Als Querrichtung oder Neigungsrichtung N wird eine dazu senkrechte Richtung in der Böschungsebene bezeichnet, wobei diese Richtung der Hangneigung folgt.

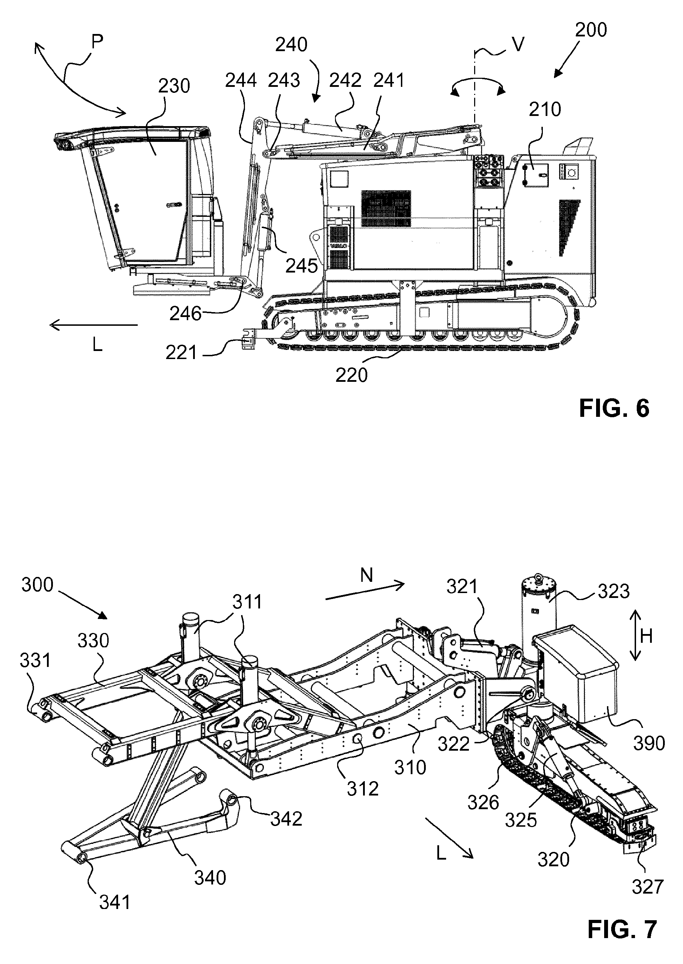

Der Böschungsfertiger weist ein Trägerfahrzeug 200 auf, welches mit zwei parallelen unteren Raupenfahrwerken 220 auf der Sohle 120 entlang der Arbeitsrichtung L verfahrbar ist. Der Aufbau des Trägerfahrzeugs wird nachstehend im Zusammenhang mit der Figur 6 näher erläutert. Am Trägerfahrzeug 200 ist seitlich ein Ausleger 300 befestigt. Der Aufbau des Auslegers wird nachstehend im Zusammenhang mit der Fig. 7 näher erläutert. Der Ausleger 300 erstreckt sich parallel zur Böschung 110 in der Querrichtung N den Hang hinauf, ist also in etwa um den Böschungswinkel α gegenüber dem Trägerfahrzeug 200 aus der Horizontalen heraus nach oben geneigt. Der Ausleger 300 ist mit Hilfe eines oberen Raupenfahrwerks 320 in der Böschung 110 abgestützt. Dadurch lässt sich der Ausleger 300 synchron mit dem Trägerfahrzeug 200 entlang der Arbeitsrichtung L verfahren. Das obere Fahrwerk 320 liegt direkt auf der geneigten Oberfläche der Böschung 110 auf und ist entsprechend senkrecht zur Böschungsoberfläche, insbesondere senkrecht zur Arbeitsrichtung L und zur Querrichtung N, ausgerichtet. Es benötigt also insbesondere keine eigene Fahrbahn auf einer Berme oder auf der Krone der Böschung. Im vorliegenden Beispiel befindet sich das obere Fahrwerk 320 unterhalb der Berme 130 in der Böschung 110.

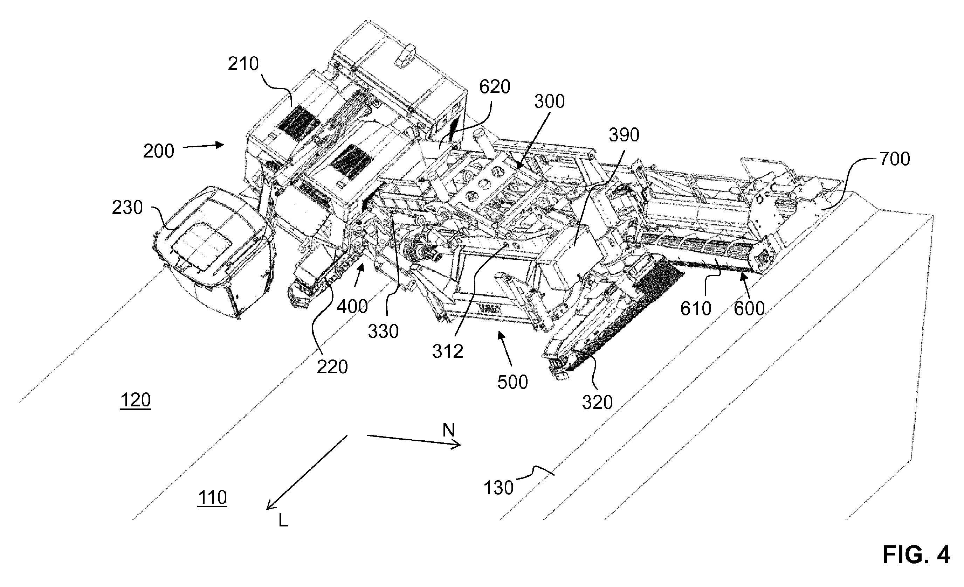

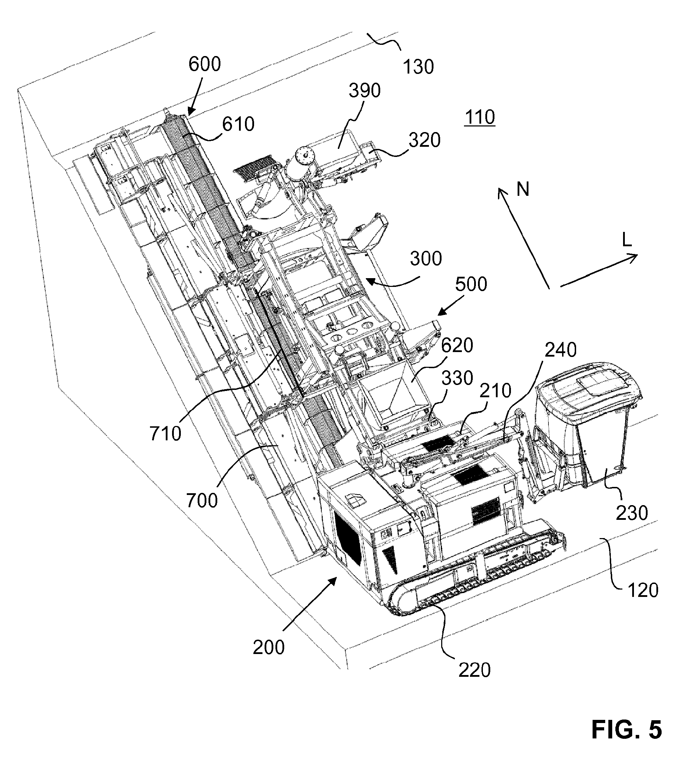

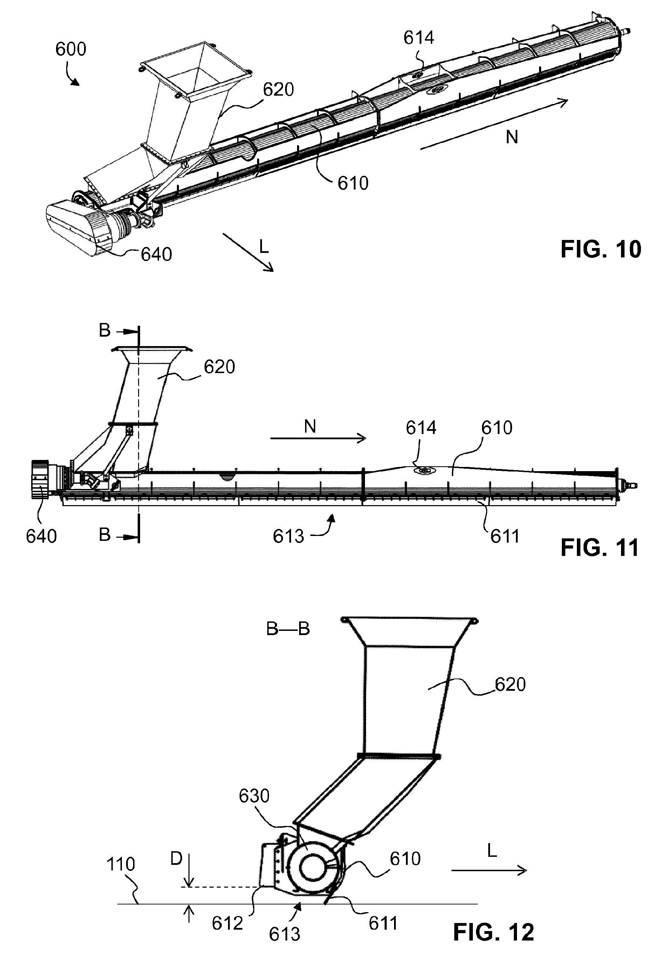

Am Ausleger 300 sind eine Verteileinrichtung 600 sowie eine Bohle 700 als Bestandteil einer Abzieheinrichtung befestigt. Die Verteileinrichtung 600 dient dazu, das auszutragende Material entlang der Querrichtung N zu verteilen und auf der Oberfläche der Böschung 110 auszutragen. Der Aufbau dieser Verteileinrichtung wird nachstehend im Zusammenhang mit den Figuren 10-12 näher erläutert. Die Bohle 700 (siehe Figuren 4 und 5) ist bezüglich der Arbeitsrichtung L hinter der Verteileinrichtung 600 angeordnet und dient dazu, das ausgetragene Material entlang der Arbeitsrichtung L abzuziehen und dabei zu glätten und zu verdichten.

Sowohl die Verteileinrichtung 600 als auch die Bohle 700 erstrecken sich entlang der Querrichtung N in einen Bereich hinein, der bezüglich der Arbeitsrichtung L hinter dem oberen Fahrwerk 320 gelegen ist. Im vorliegenden Beispiel erstrecken sich die Verteileinrichtung 600 und die Bohle 700 über die gesamte Höhe der Böschung 110 zwischen der Sohle 120 und der Berme 130 und ermöglichen es so, eine Materialdecke in einem einzigen Arbeitsgang über diese gesamte Höhe aufzubringen. Da im Bereich der Berme 130 kein Fahrwerk benötigt wird, ist die Bauhöhe im Bereich der Berme 130 sehr gering. Insbesondere erstreckt sich der Fertiger in vertikaler Richtung nicht über die Höhe der Krone 140 der Böschung hinaus.

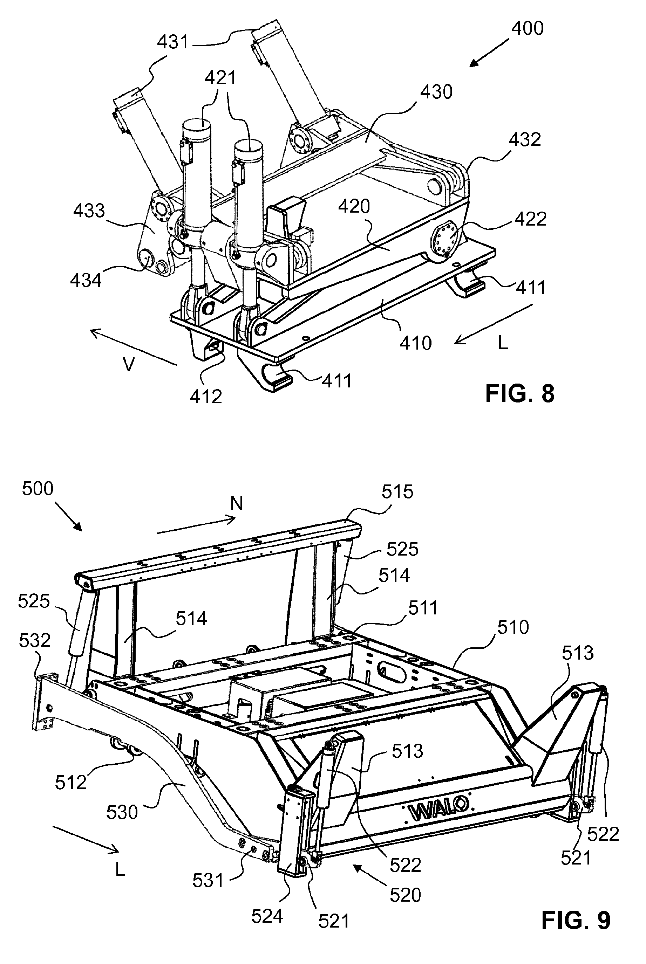

Die Verteileinrichtung 600 und die Bohle 700 sind an einem Bohlenträger 500 angebracht, welcher wiederum starr am Ausleger 300 befestigt ist. Der Ausleger 300 ist über einen Schwenkträger 400 mit dem Trägerfahrzeug 200 verbunden. Der Aufbau des Auslegers 300 wird nachstehend im Zusammenhang mit der Figur 7 näher erläutert, der Aufbau des Schwenkträgers 400 wird nachstehend im Zusammenhang mit der Figur 8 naher erläutert, und der Aufbau des Bohlenträgers 500 wird nachstehend im Zusammenhang mit der Figur 9 näher erläutert.

In der Figur 6 ist das Trägerfahrzeug 200 alleine dargestellt. Das Trägerfahrzeug umfasst eine Antriebseinheit 210, die insbesondere einen Dieselmotor, einen Generator für die elektrische Versorgung, diverse Pumpen für die hydraulischen Komponenten sowie Steuerungselemente enthält. Die Antriebseinheit 210 ist auf den schon erwähnten unteren Raupenfahrwerken 220 montiert. In Arbeitsrichtung L gesehen vor jedem Raupenfahrwerk 220 ist ein Räumschild 221 montiert, um loses Geröll auf der Sohle 120 zur Seite zu schieben. Über einen Schwenkmechanismus 240 ist ein Bedienstand 230 in Form einer geschlossenen Kabine mit der Antriebseinheit 210 verbunden. Der Schwenkmechanismus 240 ist um eine vertikale Achse V gegenüber der Antriebseinheit 210 verschwenkbar. Er umfasst einen ersten Arm 241, an dem ein zweiter Arm 244 angelenkt ist. Mittels eines Aktors 242 lässt sich der zweite Arm 244 um eine horizontale Schwenkachse 243 gegenüber dem ersten Arm 241 verschwenken. Der Bedienstand 230 ist wiederum schwenkbar am zweiten Arm 244 angelenkt. Mittels eines Aktors 245 lässt sich der Bedienstand 230 um eine horizontale Schwenkachse 246 gegenüber dem zweiten Arm 244 verschwenken. Insgesamt lässt sich so die Position (insbesondere die Höhe) und die Ausrichtung des Bedienstands 230 relativ zur Antriebseinheit 210 verändern. Auf diese Weise kann das Bedienpersonal den Bedienstand eine gewünschte Position bringen, so dass das Bedienpersonal einen optimalen Einblick in die Böschung 110 erhält, um den Fertigungsprozess zu überwachen.

In der Figur 7 ist der Ausleger 300 näher illustriert. Der Ausleger 300 weist einen Grundrahmen 310 auf, an dem insbesondere das obere Fahrwerk 320 montiert ist. Das Fahrwerk 320 ist mit Hilfe eines hydraulischen Aktors 321 um eine horizontale Schwenkachse 322, die im Wesentlichen parallel zur Arbeitsrichtung L verläuft, schwenkbar, um das Fahrwerk korrekt senkrecht zur Böschungsoberfläche auszurichten (Radachsen der Fahrwerksräder parallel zur Böschungsoberfläche). Ein weiterer hydraulischer Aktor 325 dient dazu, das Fahrwerk um eine Achse 326, welche parallel zur Querrichtung N verläuft, zu verschwenken. Dadurch kann sichergestellt werden, dass sich die Raupenkette jederzeit plan auf der Böschungsoberfläche bewegt. Mit Hilfe eines weiteren hydraulischen Aktors 323 kann die Höhe des Auslegers 300 relativ zum oberen Fahrwerk 320 entlang einer Richtung H senkrecht zur Böschungsoberfläche verändert werden. Ein Räumschild 327 dient dazu, loses Geröll vor dem Fahrwerk zur Seite zu räumen. Oberhalb des Fahrwerks 320 ist eine Steuerungseinheit 390 für hydraulische Aktoren des oberen Fahrwerks 320 angeordnet. Das obere Fahrwerk 320 lässt sich separat von den unteren Fahrwerken 220 antreiben.

Der Grundrahmen 310 ist schwenkbar mit einem Verbindungsrahmen 330 verbunden. Um den Grundrahmen 310 gegenüber dem Verbindungsrahmen 330 zu verschwenken, sind hydraulische Aktoren 311 vorgesehen. Diese ermöglichen es, den Grundrahmen 310 um eine horizontale Achse 312, die im Wesentlichen parallel zur Arbeitsrichtung L verläuft, gegenüber dem Verbindungsrahmen 330 zu verschwenken. Am Verbindungsrahmen 330 sind hülsenförmige Verbindungsstrukturen 331 vorgesehen, die zur Verbindung des Auslegers 300 mit dem nachstehend erläuterten Schwenkträger 400 dienen. Der Verbindungsrahmen 330 ist mit einem sich schräg nach unten erstreckenden Fortsatz 340 versehen, an dem eine weitere hülsenförmige Verbindungsstruktur 341 zur Verbindung des Auslegers 300 mit der Verteileinrichtung 600 sowie zwei hülsenförmige Verbindungsstrukturen 342 zur Verbindung mit dem ebenfalls nachstehend erläuterten Bohlenträger 500 vorgesehen sind.

Der Schwenkträger 400 ist in der Figur 8 näher illustriert. Er weist einen plattenförmigen Grundkörper 410 auf, an dem klauenartige Verbindungsstrukturen 411 sowie flanschartige Verbindungsstrukturen 412 zur Verbindung des Schwenkträgers 400 mit einer Seite des Trägerfahrzeugs 200 vorgesehen sind. Auf der gegenüberliegenden Seite des plattenförmigen Grundkörpers 410 ist ein erster Schwenkkörper 420 angelenkt. Dieser ist mit Hilfe von hydraulischen Aktoren 421 um eine erste Schwenkachse 422 verschwenkbar. Die erste Schwenkachse 422 verläuft dabei im eingebauten Zustand in vertikaler Richtung, parallel zur Schwenkachse V der Figur 6. Dadurch bestimmt die Lage des ersten Schwenkkörpers 420 die Ausrichtung des Auslegers 300 um die vertikale Schwenkachse 422 herum, insbesondere die Lage des oberen Fahrwerks 320 relativ zum Trägerfahrzeug 200 bezüglich der Arbeitsrichtung. Wenn die Aktoren 421 z.B. ganz ausgefahren sind, befindet sich das obere Fahrwerk 320 in Arbeitsrichtung weiter hinten, als wenn die Aktoren 421 eingefahren sind.

Am ersten Schwenkkörper 420 ist wiederum ein zweiter Schwenkkörper 430 angelenkt. Dieser ist mit Hilfe von hydraulischen Aktoren 431 um eine zweite Schwenkachse 432 gegenüber dem ersten Schwenkkörper 420 verschwenkbar. Dabei verläuft die zweite Schwenkachse 432 in wesentlichen parallel zur Arbeitsrichtung. Abweichungen dieser Achse von der Arbeitsrichtung sind dabei durch die veränderliche Schwenklage des ersten Schwenkkörpers 420 relativ zum Grundkörper 410 bedingt. Der zweite Schwenkkörper 430 weist Koppelbereiche 433 auf, an denen Verbindungsstrukturen 434 zur Verbindung mit den komplementären Verbindungsstrukturen 331 am Verbindungsrahmen 330 des Auslegers 300 ausgebildet sind.

Der Schwenkträger 400 ermöglicht eine Ausrichtung des Verbindungsrahmens 330 um zwei Achsen relativ zum Trägerfahrzeug 200. Zusätzlich ist der Grundrahmen 310 schwenkbar am Verbindungsrahmen 330 befestigt. Insgesamt wird dadurch einerseits eine Höhenanpassung des Grundrahmens 310 gegenüber dem unteren Fahrwerk 220 und andererseits eine Anpassung der Orientierung von Verteileinrichtung 600 und Bohle 700 gegenüber der Böschung ermöglicht.

In der Figur 9 ist der Bohlenträger 500 alleine illustriert. Der Bohlenträger 500 weist einen Basisrahmen 510 auf, an dem Bohrungen 511 zur starren Verbindung des Basisrahmens 510 mit dem Grundrahmen 310 des Auslegers 300 vorgesehen sind. Verbindungsstrukturen 512 am Basisrahmen 510 dienen zur Anbringung der Verteileinrichtung 600 am Basisrahmen 510. Am Basisrahmen 510 sind beidseitig zwei Zugarme 530 um eine sich in Querrichtung N erstreckende Achse 531 schwenkbar angebracht. Die Zugarme 530 dienen zur Anbringung der Bohle 700. Dazu weist jeder Zugarm 530 an seinem hinteren Ende einen Befestigungsflansch 532 für die Bohle 700 auf.

Zur höhenverstellbaren Anlenkung der Zugarme 530 weist der Basisrahmen 510 an seinem in Arbeitsrichtung gesehen vorderen Ende beidseitig jeweils eine nach oben vorstehende Auskragung 513 auf, die seitlich am Rand des Basisrahmens 510 angeordnet ist. An jeder dieser Auskragungen ist eine Nivelliereinrichtung 520 zur Höhenverstellung der Schwenkachse 531 eines der beiden Zugarme 530 angebracht. Jede Nivelliereinrichtung umfasst einen Nivellierschieber 521, der sowohl lateral als auch bezüglich der Arbeitsrichtung in einem Führungsrahmen 524 geführt ist. Insbesondere ist der Führungsrahmen dazu ausgebildet, auf den Nivellierschieber 521 eine Zugkraft in Arbeitsrichtung L zu übertragen. Der Nivellierschieber 521 ist im Führungsrahmen 524 mittels eines hydraulischen Aktors 522 (Nivellierzylinder) höhenverstellbar. Am Nivellierschieber 521 ist der jeweilige Zugarm 530 für die Bohle 700 schwenkbar angelenkt.

Hydraulische Aktoren 533 dienen dazu, das hintere Ende jedes Zugarmes 530 bei Bedarf anzuheben. Diese Aktoren sind an einem Querbalken 515 aufgehängt, welcher auf hinteren Auskragungen 514 des Basisrahmens 510 aufliegt. Im Normalbetrieb des Fertigers sind die Aktoren 533 aber funktionslos, so dass die Bohle 700 allein aufgrund der Gewichtskraft auf dem ausgetragenen Material aufliegt (schwimmende Bohle). Dabei lässt sich der sogenannte Anstellwinkel der schwimmenden Bohle 700 relativ zur Arbeitsrichtung L durch eine Veränderung der Höhenlage der Schwenkachsen 531, um die die Zugarme 530 gegenüber dem Basisrahmen 510 verschwenkbar sind, mit Hilfe der Aktoren 521 einstellen.

Um die Hangabtriebskraft, die in Querrichtung auf die Bohle wirkt, aufzunehmen, ist zwischen dem Bohlenträger 500 und der Bohle 700 mindestens ein Abspannseil 710 vorgesehen. Im vorliegenden Fall erstreckt sich dieses Abspannseil von der oberen der beiden Auskragungen 514 aus zum hinteren Ende des unteren Zugarmes 530 (siehe Fig. 5). Ein solches Zugseil erleichtert es, eine schwimmende Bohle, wie sie üblicherweise im Strassenbau eingesetzt wird, ohne weitere konstruktive Änderungen auch bei einem Böschungsfertiger einzusetzen. Ohne ein solches Zugseil könnte die Hangabtriebskraft aufgrund der grossen Querneigung zu einer übermässigen Biegebeanspruchung der Zugarme in Querrichtung sowie zu weiteren unerwünschten Belastungen in Querrichtung und damit letztlich zu Fehlfunktionen führen.

In den Figuren 10-12 ist die Verteileinrichtung 600 alleine illustriert. Die Verteileinrichtung 600 umfasst eine rohrförmige Hülle 610, in der eine Schnecke 630 angeordnet ist. Die Hülle 610 weist ein Schneckenhubdreieck 614 auf, welches mittels Bolzen mit den Befestigungsstrukturen 512 am Bohlenträger 500 verbunden wird, um die Verteileinrichtung 600 am Bohlenträger 500 zu befestigen. Über zwei hydraulische Aktoren lässt sich die Distanz der Verteileinrichtung 600 zur Böschung verändern. Über eine Einfüllschütte 620 kann das auszubringende Material dem Inneren der Hülle 610 und damit der Schnecke 630 zugeführt werden. Die Schnecke 630 wird von einem Schneckenantrieb 640 zu einer Drehung angetrieben, um das Material von der Einfüllschütte in der Querrichtung N hangaufwärts zu fördern. Die Hülle 610 weist an ihrer Unterseite eine durchgehende, langgestreckte Austragöffnung 613 auf, die sich entlang der Querrichtung N erstreckt. Die Schnecke 630 und die Hülle 610 bilden insofern gemeinsam eine Trogschnecke, die allerdings nach unten hin und nicht, wie üblich, nach oben hin geöffnet ist. Abgesehen von der Austragöffnung 613 und einer Einfüllöffnung im Bereich der Einfüllschütte umgibt die Hülle 610 die Schnecke an ihrem Umfang vollständig. Dabei ist der Innenumfang der Hülle 610 in einem geringen Abstand von ca. 5-10 mm vom Aussenumfang der Schnecke 630 angeordnet, so dass möglichst wenig Material zwischen dem Aussenumfang der Schnecke 630 und der Hülle 610 hindurchtreten kann. Insbesondere ist die Hülle 610 nach oben geschlossen. Dabei bedeckt die Hülle die Schnecke ausserhalb der Einfüllschütte durchgehend nach oben hin.

Am bezüglich der Arbeitsrichtung L vorderen Ende der Austragsöffnung 613 ist an der Hülle 610 eine elastische Überbrückungslippe 611 aus einem elastischen Kunststoffmaterial oder Gummi angebracht. Diese Überbrückungslippe 611 überbrückt den Abstand zwischen dem vorderen Rand der Austragöffnung 613 und der Böschungsoberfläche nach vorne hin und verhindert dadurch, dass das ausgetragene Material nach vorne hin, in Arbeitsrichtung L, ausweichen kann, nachdem es aus der Austragöffnung 613 ausgetreten ist. Am hinteren Ende weist das Gehäuse 610 einen Fortsatz auf, der mit seiner Unterseite eine Abstreiffläche 612 bildet, die sich an den hinteren Rand der Austragöffnung 613 anschliesst. Mit dieser Abstreiffläche wird das ausgetragene Material an die Böschung angelegt und dadurch an der Böschung fixiert. Zwischen der Böschungsoberfläche und der Abstreiffläche 612 ist eine Öffnungshöhe D definiert. Diese Öffnungshöhe D lässt sich mit Hilfe der verschiedenen Aktoren am Ausleger, darunter insbesondere auch mit Hilfe des zur Höhenverstellung gegenüber dem oberen Fahrwerk 320 dienenden Aktors 323, einstellen. Dadurch lässt sich die Dicke der ausgetragenen Schicht vor ihre Verdichtung durch die Bohle 700 einstellen.

Die Einfüllschütte 620 ist im Verbindungsrahmen 330 des Auslegers 300 angeordnet. Sie befindet sich dadurch in einem Bereich, der dem Trägerfahrzeug 200 unmittelbar benachbart ist. Dadurch kann die Beschickung der Einfüllschütte 620 mit dem auszutragenden Material von der Sohle 120 her erfolgen, z.B. mit Hilfe eines geeigneten Förderbands oder einer Becherkette.

Im Betrieb des Fertigers wird das auszutragende Material in die Einfüllschütte 620 eingefüllt. Bei dem Material handelt es sich üblicherweise um ein Mischgut wie Beton oder Asphalt. Das Material wird laufend durch die Schnecke 630 entlang der Querrichtung N die Böschung hinauf in Richtung Krone gefördert. Da die Hülle 610 die Schnecke 630 an ihrem Umfang mit Ausnahme der Austragöffnung 613 und der Einfüllöffnung vollständig umgibt, kann während dieses Fördervorgangs kaum Material über die Schnecke 630 hinweg nach unten in Richtung der Einfüllschütte zurückrutschen, wie dies bei einer nach oben hin offenen Hülle der Fall wäre. Dadurch wird eine Entmischung des auszutragenden Mischguts wirkungsvoll verringert. Die Menge des ausgetragenen Materials pro Zeiteinheit und damit die Dicke der ausgetragenen Schicht wird durch die Öffnungshöhe D, durch die Förderleistung der Schnecke 630 und durch die Vorschubgeschwindigkeit entlang der Arbeitsrichtung L bestimmt.

Indem das auszutragende Material laufend durch die Schnecke 630 entgegen der Hangneigung nach oben gefördert wird und das Material unmittelbar nach seinem Austritt aus der Austrittsöffnung 613 durch die Abstreiffläche 612 abgestreift, an die Böschung angelegt und dabei leicht vorverdichtet wird, wird die Tendenz vermindert, dass das Material nach dem Austrag aufgrund der Hangabtriebskraft wieder abwärts in Richtung Sohle abrutscht. Das Material wird somit durch die fortlaufende Förderwirkung der Schnecke 630 und die Verdichtungswirkung der Abstreiffläche in der Böschung fixiert, bevor es durch die nachfolgende Bohle 700 weiter verdichtet und geglättet wird. Sowohl die Abstreiffläche 612 als auch die Bohle 700 wirken insofern letztlich gemeinsam als Abzieheinrichtung.

Indem die Bohle 700 als schwimmende Bohle ausgebildet ist, gleicht sie kurz gestreckte Unebenheiten in der Böschungsoberfläche automatisch aus, folgt aber grösseren Unebenheiten und stellt so eine weitgehend konstante Dicke der Decke sicher. Die resultierende Dicke hängt insbesondere vom Anstellwinkel der Bohle 700 ab, welcher durch die Nivelliereinrichtungen 520 eingestellt wird, von der Fahrgeschwindigkeit in Arbeitsrichtung L und von den Eigenschaften des ausgetragenen Materials wie zum Beispiel seiner Verdichtbarkeit.

Die vorstehend geschilderte Konstruktion der schwimmenden Bohle entspricht weitgehend den bekannten Konstruktionen, die bei üblichen Strassenfertigern für die Fertigung von horizontalen Decken eingesetzt werden. Statt an einem Zugfahrzeug ist die schwimmende Bohle bei dem vorliegenden Fertiger allerdings beidseitig an einem speziell zu diesem Zweck ausgebildeten Bohlenträger angebracht. Dieser ermöglicht es, die Zugarme 530 an seinen Seiten genauso wie an einem Zugfahrzeug anzubringen, obwohl die Bohle nicht direkt an einem Zugfahrzeug, sondern an einem Ausleger befestigt ist. Dadurch wird es möglich, eine schwimmende Bohle von an sich bekannter Konstruktion versetzt zum Trägerfahrzeug 200 am Ausleger 300 einzusetzen.

Als Bohle 700 kommt eine an sich bekannte Bohle zum Einsatz, wie sie normalerweise im Strassenbau eingesetzt wird. Auch die Zugarme 530 entsprechen der Konstruktion, wie sie üblicherweise im Strassenbau zum Einsatz kommt. Der genaue Aufbau der Bohle hängt insbesondere vom einzubauenden Material ab. Wenn die Bohle für den Einbau einer Asphaltdecke ausgebildet ist, kann sie z.B. eine Heizeinrichtung, eine Stampfeinrichtung und/oder eine Vibrationseinrichtung aufweisen, wie dies aus dem Stand der Technik an sich bekannt ist.

Im vorstehend geschilderten Ausführungsbeispiel befindet sich das Trägerfahrzeug 200 in der Sohle 120 unterhalb der Böschung 110, und der Ausleger 300 mit der Verteileinrichtung 600 und der Bohle 700 erstreckt sich vom Trägerfahrzeug 200 aus entlang der Hangneigung nach oben. Stattdessen ist es auch denkbar, dass Trägerfahrzeug 200 auf der Krone 140 oder auf einer Berme 130 der Böschung anzuordnen, wobei dann der Ausleger 300 mit der Verteileinrichtung 600 und der Bohle 700 vom Trägerfahrzeug 200 aus entlang der Hangneigung nach unten in die Böschung hinein ragt.

Im vorliegenden Beispiel befindet sich der Ausleger 300 mit der Verteileinrichtung 600 und der Bohle 700 vom Trägerfahrzeug aus gesehen in Arbeitsrichtung L auf der linken Seite. Stattdessen ist es mit nur geringen konstruktiven Änderungen auch möglich, den Ausleger auf der rechten Seite des Trägerfahrzeuges anzubringen.

Die Schnecke und die Bohle können in verschiedenen Breiten bereitgestellt werden. In der Praxis kann die Breite entlang der Querrichtung N z.B. ca. 5-12 Meter betragen. Dazu kann die Schnecke modular aufgebaut sein, mit mindestens zwei Schneckenabschnitten, die über eine geeignete Verbindung drehfest miteinander verbunden sind. Insbesondere kann dazu eine Verbindung mittels Vierkant zur Drehmomentübertragung mit einem sich entlang der Schneckenachse anschliessenden Zentrierkonus eingesetzt werden, wobei die Enden der Schneckenabschnitte mittels einer Zugspindel miteinander verspannt werden.

Während die Verwendung einer schwimmenden Bohle von Vorteil ist, kann je nach dem vorgesehenen Einsatzbereich auch eine starre Bohle oder eine der Verteileinrichtung nachfolgende Gleitschalung eingesetzt werden.

**BEZUGSZEICHENLISTE**

| | | | |
|---|---|---|---|
| 100 | Geländeabschnitt | 341 | Verbindungsstruktur |
| 110 | Böschung | 342 | Verbindungsstruktur |
| 120 | Sohle | 390 | Antriebseinheit |
| 130 | Berme | 400 | Schwenkträger |
| 140 | Krone | 410 | Grundkörper |
| 200 | Trägerfahrzeug | 411 | Verbindungsstruktur |
| 210 | Antriebseinheit | 412 | Verbindungsstruktur |
| 220 | erstes Fahrwerk | 420 | erster Schwenkkörper |
| 221 | Räumschild | 421 | Aktor |
| 230 | Bedienstand | 422 | Schwenkachse |
| 240 | Schwenkmechanismus | 430 | zweiter Schwenkkörper |
| 241 | Arm | 431 | Aktor |
| 242 | Aktor | 432 | Schwenkachse |
| 243 | Schwenkachse | 433 | Koppelbereich |
| 244 | Arm | 434 | Verbindungsstruktur |
| 245 | Aktor | 500 | Bohlenträger |
| 246 | Schwenkachse | 510 | Basisrahmen |
| 300 | Ausleger | 511 | Bohrung |
| 310 | Grundrahmen | 512 | Verbindungsstruktur |
| 311 | Aktor | 513 | vordere Auskragung |
| 312 | Schwenkachse | 514 | hintere Auskragung |
| 320 | zweites Fahrwerk | 515 | Querbalken |
| 321 | Aktor | 520 | Nivelliereinrichtung |
| 322 | Schwenkachse | 521 | Nivellierschieber |
| 323 | Aktor | 522 | Aktor |
| 325 | Aktor | 524 | Führungsrahmen |
| 326 | Schwenkachse | 530 | Zugarm |
| 327 | Räumschild | 531 | Schwenkachse |
| 330 | Verbindungsrahmen | 532 | Befestigungsflansch |
| 331 | Verbindungsstruktur | 533 | Aktor |
| 340 | Fortsatz | 600 | Verteileinrichtung |
| 610 | Hülle | α | Böschungswinkel |
| 611 | Abstreifer | H | Höhe gegen Böschung |
| 612 | Abstreiffläche | L | Arbeitsrichtung |
| 613 | Austragöffnung | N | Querrichtung |
| 614 | Schneckenhubdreieck | P | Bewegungsrichtung |
| 620 | Einfüllschütte | V | vertikale Schwenkachse |
| 630 | Schnecke | | |
| 700 | Bohle | | |

## Patentansprüche

1. Fertiger zum Einbau einer Decke aus einem Material an einer Böschung (110) mit einem Böschungswinkel (α), wobei der Fertiger aufweist:
ein Trägerfahrzeug (200) mit mindestens einem ersten Fahrwerk (220), um das Trägerfahrzeug entlang einer Arbeitsrichtung (L) zu verfahren;
einen am Trägerfahrzeug (200) befestigten Ausleger (300), der sich entlang einer Querrichtung (N) quer zur Arbeitsrichtung (L) seitlich vom Trägerfahrzeug weg erstreckt, wobei der Ausleger (300) zur Anpassung an den Böschungswinkel (α) gegenüber dem Trägerfahrzeug (200) verschwenkbar ist und mindestens ein zweites Fahrwerk (320) aufweist, um den Ausleger (300) abzustützen und gemeinsam mit dem Trägerfahrzeug (200) entlang der Arbeitsrichtung (L) zu verfahren;
eine am Ausleger (300) befestigte Verteileinrichtung (600), die dazu ausgebildet ist, das Material entlang der Querrichtung (N) zu verteilen und auszutragen, und
eine der Verteileinrichtung (600) bezüglich der Arbeitsrichtung (L) nachfolgende Abzieheinrichtung (700) zum Abziehen des ausgetragenen Materials entlang der Arbeitsrichtung (L),
**dadurch gekennzeichnet,**
**dass** das zweite Fahrwerk dazu ausgebildet ist, sich auf einem geneigten Bereich der Böschung (110) abzustützen, und
**dass** sich die Verteileinrichtung (600) und die Abzieheinrichtung (700) entlang der Querrichtung (N) in einen bezüglich der Arbeitsrichtung (L) hinter dem zweiten Fahrwerk (320) gelegenen Bereich hinein erstrecken.

2. Fertiger nach Anspruch 1, wobei die Verteileinrichtung (600) eine sich entlang der Querrichtung (N) erstreckende Schnecke (630) sowie eine rohrförmige Hülle (610) umfasst, welche zumindest einen Teil der Schnecke (630) mit Ausnahme einer nach unten hin offenen Austragöffnung (613) umlaufend bedeckt, so dass die Schnecke (630) und die rohrförmige Hülle (610) gemeinsam eine nach unten hin offene Trogschnecke bilden.

3. Fertiger nach Anspruch 2, wobei die Schnecke (630) und die Hülle (610) gemeinsam bezüglich dem ersten und dem zweiten Fahrwerk (220, 320) höhenverstellbar sind, so dass eine variable Öffnungshöhe (D) der Austragöffnung (613) relativ zur Böschung einstellbar ist.

4. Fertiger nach Anspruch 3, wobei die Hülle (610) am bezüglich der Arbeitsrichtung (L) vorderen Ende der Austragöffnung (613) eine elastische Überbrückungslippe (611) aufweist, die dazu ausgebildet ist, die Öffnungshöhe (D) zur Böschung hin zu überdecken.

5. Fertiger nach einem der Ansprüche 2-4, wobei die Hülle (610) am bezüglich der Arbeitsrichtung (L) hinteren Ende der Austragöffnung (613) eine Abstreiffläche (612) bildet, um durch die Austragöffnung (613) ausgetragenes Material an der Böschung zu fixieren.

6. Fertiger nach einem der Ansprüche 2-5,
wobei die Verteileinrichtung (600) eine Einfüllschütte (620) aufweist, die an der Hülle (610) angebracht ist, um die Schnecke (630) mit dem auszutragenden Material zu beschicken, und
wobei die Einfüllschütte (620) in einem zum Trägerfahrzeug (200) benachbarten Bereich des Auslegers (300) angeordnet ist.

7. Fertiger nach einem der vorhergehenden Ansprüche, wobei die Abzieheinrichtung (700) eine schwimmende Bohle umfasst.

8. Fertiger nach Anspruch 7, welcher einen Bohlenträger (500) aufweist, der zwischen dem Trägerfahrzeug (200) und dem zweiten Fahrwerk (320) am Ausleger (300) angebracht ist,
wobei der Bohlenträger (500) bezüglich der Querrichtung (N) eine erste und eine zweite Seite aufweist,
wobei am Bohlenträger (500) an der ersten Seite und an der zweiten Seite jeweils ein Zugarm (530) schwenkbar angebracht ist,
und wobei die schwimmende Bohle mit den Zugarmen (530) verbunden ist.

9. Fertiger nach Anspruch 8,
wobei am Bohlenträger (500) ein Verstellmechanismus (514, 521) ausgebildet ist, um einen Anstellwinkel der schwimmenden Bohle zu verändern, und
wobei der Verstellmechanismus (514, 521) bezüglich der Querrichtung (N) beidseitig am Bohlenträger (500) ausgebildet ist.

10. Fertiger nach einem der vorhergehenden Ansprüche,
wobei der Fertiger einen Bedienstand (230) mit Bedienelementen zur Bedienung des Fertigers aufweist,
wobei der Bedienstand (230) derart mittels eines Schwenkmechanismus (240) am Trägerfahrzeug (200) angebracht ist, dass der Bedienstand (230) relativ zum Trägerfahrzeug (200) höhenverstellbar und um eine vertikale Achse (V) verschwenkbar ist.

11. Fertiger zum Einbau einer Decke aus einem Material an einer Böschung (110) mit einem Böschungswinkel (α), wobei der Fertiger aufweist:
ein Trägerfahrzeug (200) mit mindestens einem ersten Fahrwerk (220), um das Trägerfahrzeug entlang einer Arbeitsrichtung (L) zu verfahren;
einen am Trägerfahrzeug (200) befestigten Ausleger (300), der sich entlang einer Querrichtung (N) quer zur Arbeitsrichtung (L) seitlich vom Trägerfahrzeug weg erstreckt, wobei der Ausleger (300) zur Anpassung an den Böschungswinkel (α) gegenüber dem Trägerfahrzeug (200) verschwenkbar ist und mindestens ein zweites Fahrwerk (320) aufweist, um den Ausleger (300) in der Böschung (110), auf einer Berme (130) oder auf einer Krone (140) der Böschung abzustützen und gemeinsam mit dem Trägerfahrzeug (200) entlang der Arbeitsrichtung (L) zu verfahren; und
eine am Ausleger (300) befestigte Verteileinrichtung (600), die dazu ausgebildet ist, das auszutragende Material entlang der Querrichtung (N) zu verteilen und auszutragen,
**dadurch gekennzeichnet, dass**
die Verteileinrichtung (600) eine sich entlang der Querrichtung (N) erstreckende Schnecke (630) sowie eine rohrförmige Hülle (610) umfasst, welche zumindest einen Teil der Schnecke (630) mit Ausnahme einer nach unten hin offenen Austragöffnung (613) umlaufend bedeckt, so dass die Schnecke (630) und die rohrförmige Hülle (610) gemeinsam eine nach unten hin offene Trogschnecke bilden.

12. Fertiger nach Anspruch 11, wobei die Schnecke (630) und die Hülle (610) gemeinsam bezüglich dem ersten und dem zweiten Fahrwerk (220, 320) höhenverstellbar sind, so dass eine variable Öffnungshöhe (D) der Austragöffnung (613) relativ zur Böschung einstellbar ist, und wobei die Hülle (610) optional am bezüglich der Arbeitsrichtung (L) vorderen Ende der Austragöffnung (613) eine elastische Überbrückungslippe (611) aufweist, die dazu ausgebildet ist, die Öffnungshöhe (D) zur Böschung hin zu überdecken.

13. Fertiger nach Anspruch 11 oder 12, wobei die Hülle (610) am bezüglich der Arbeitsrichtung (L) hinteren Ende der Austragöffnung (613) eine Abstreiffläche (612) bildet, um durch die Austragöffnung (613) ausgetragenes Material an der Böschung zu fixieren.

14. Fertiger zum Einbau einer Decke aus einem Material an einer Böschung (110) mit einem Böschungswinkel (α), wobei der Fertiger aufweist:
ein Trägerfahrzeug (200) mit mindestens einem ersten Fahrwerk (220), um das Trägerfahrzeug entlang einer Arbeitsrichtung (L) zu verfahren;
einen am Trägerfahrzeug (200) befestigten Ausleger (300), der sich entlang einer Querrichtung (N) quer zur Arbeitsrichtung (L) seitlich vom Trägerfahrzeug weg erstreckt, wobei der Ausleger (300) zur Anpassung an den Böschungswinkel (α) gegenüber dem Trägerfahrzeug (200) verschwenkbar ist und mindestens ein zweites Fahrwerk (320) aufweist, um den Ausleger (300) in der Böschung (110), auf einer Berme (130) oder auf einer Krone (140) der Böschung abzustützen und gemeinsam mit dem Trägerfahrzeug (200) entlang der Arbeitsrichtung (L) zu verfahren;
eine am Ausleger (300) befestigte Verteileinrichtung (600), die dazu ausgebildet ist, das auszutragende Material entlang der Querrichtung (N) zu verteilen und auszutragen; und
eine der Verteileinrichtung (600) bezüglich der Arbeitsrichtung (L) nachfolgende Abzieheinrichtung (700) zum Abziehen des ausgetragenen Materials entlang der Arbeitsrichtung (L),
**dadurch gekennzeichnet, dass** die Abzieheinrichtung (700) eine schwimmende Bohle umfasst.

15. Fertiger zum Einbau einer Decke aus einem Material an einer Böschung (110) mit einem Böschungswinkel (α), wobei der Fertiger aufweist:
ein Trägerfahrzeug (200) mit mindestens einem ersten Fahrwerk (220), um das Trägerfahrzeug entlang einer Arbeitsrichtung (L) zu verfahren;
einen am Trägerfahrzeug (200) befestigten Ausleger (300), der sich entlang einer Querrichtung (N) quer zur Arbeitsrichtung (L) seitlich vom Trägerfahrzeug weg erstreckt, wobei der Ausleger (300) zur Anpassung an den Böschungswinkel (α) gegenüber dem Trägerfahrzeug (200) verschwenkbar ist und mindestens ein zweites Fahrwerk (320) aufweist, um den Ausleger (300) in der Böschung (110), auf einer Berme (130) oder auf einer Krone (140) der Böschung abzustützen und gemeinsam mit dem Trägerfahrzeug (200) entlang der Arbeitsrichtung (L) zu verfahren;
eine am Ausleger (300) befestigte Verteileinrichtung (600), die dazu ausgebildet ist, das auszutragende Material entlang der Querrichtung (N) zu verteilen und auszutragen; und
einen Bedienstand (230) mit Bedienelementen zur Bedienung des Fertigers,
**dadurch gekennzeichnet, dass** der Bedienstand (230) derart mittels eines Schwenkmechanismus (240) am Trägerfahrzeug (200) angebracht ist, dass er relativ zum Trägerfahrzeug (200) höhenverstellbar und um eine vertikale Achse (V) verschwenkbar ist.
